# EUROPEAN PATENT SPECIFICATION

(11) **EP 0 395 128 B1**
(45) Date of publication and mention of the grant of the patent: **03.08.1994**
(21) Application number: 90200722.8
(22) Date of filing: 27.03.1990
(51) Int. Cl.: C08J 11/06

(54) **A process for manufacturing a composite material comprising thermoplastic polymers and residuals from the manufacture of plastic laminates, and the composite material so obtained**
Verfahren zur Herstellung eines Verbundmaterials, enthaltend thermoplastische Polymere und Rückstände der Herstellung von Kunststofflaminaten, und die so erhaltenen Verbundmaterialien
Procédé pour fabriquer un matériau composite comprenant des polymères thermoplastiques et des déchets de la fabrication de laminés synthétiques, ainsi que les matériaux composites obtenus

(30) Priority: 19.04.1989 IT 6728489
(43) Date of publication of application: 31.10.1990
(73) Proprietor: ABET LAMINATI S.p.A., I-12042 Bra (Cuneo) (IT)
(72) Inventor: Bortoluzzi, Claudio, I-16011 Arenzano GE (IT); Bogana, Raffaele, I-12042 Bra (CN) (IT)
(74) Representative: Robba, Eugenio

(56) References cited:
- EP-A- 0 303 015
- DD-A- 227 380
- DE-A- 2 261 329
- DE-A- 2 927 053

## Description

This invention relates to a process for manufacturing a composite material comprising thermoplastic polymers and residuals from the manufacture of plastic laminates, as well as to the composite material so produced.

A laminated plastic or laminate is a foil material substantially made up by strong sheets of "Kraft" paper superimposed to each other and impregnated with phenolic resin, and by an outer decorative sheet impregnated with melaminic resin, formed in multi-level presses at temperatures of about 150°C and pressures of about 9.8 MPa (100 kg/cm²).

In the manufacturing of plastic laminates for ornamental purposes, a large amount of residuals and scraps of material is produced which has therefore to be disposed of.

The scrap material mainly comprises the contours of the impregnated paper stack protruding from the press plates, which are produced during the trimming, or the paper cutouts produced in the various impregnation steps, or powders and chips produced when grinding or milling the laminate back side to make for a better glue adhesion in later applications.

The disposal of these residuals obviously raises the problem of possible environment pollution and of cost burdening the laminate manufacturer.

The object of the present invention is therefore to overcome the problems of pollution and unproductive expenses deriving from the need of disposing of the scraps and residuals from the manufacture of ornamental plastic laminates.

Another object of the present invention is to increase the value of the above scraps and residuals, by converting them into a material suitable for thermoforming and with good technological properties, able to find several applications and therefore to take on a considerable commercial value.

The above and other objects and advantages of the invention, as will become evident in the proceeding of the description, are achieved by means of a process for manufacturing a thermoplastic composite material, characterized in that it comprises:
- a preliminary step of grinding a material made up by scraps and/or residuals from the production of ornamental plastic laminates, comprising at least 50% by weight of cellulose and at least 20% by weight of thermosetting resins ,including phenol formaldehyde resins and melamine formaldheide resins, impregnating said cellulose, said thermosetting resins being further polycondensable, until the material is reduced to a fine powder made up by particles having sizes or diameter smaller than 4 mm;
- preparing a mixture containing a thermoplastic resin and the above ground scrap material, said thermoplastic resin being comprised between 20% and 60% by weight of the mixture;
- heating said mixture to a temperature comprised between 130 and 260°C in an extruder;
- forming semifinished articles through extrusion and cooling of said mixture.

A more detailed description of the invention will be given with reference also to the attached drawings, in which:
- Fig. 1 is a diagram of a plant for carrying out the process of the invention.
- Fig. 2 is a photostatic copy of a photomicrograph of the ground scrap material used in the process of the present invention.

The process of the invention permits to re-utilize and increase the value of residuals, scraps and wastes of laminates or components thereof which are produced in the manufacture of ornamental plastic laminates.

After proper grinding, this scrap material has been found particularly suitable to be mixed with thermoplastic resins to form a thermoformable composite article with high technological properties, which in turn can be used as a support for ornamental upholstery, such as parts of furnitures or coachworks, separation panels in building, several technical articles obtained through molding.

Whereas until now the scraps and the laminate residuals did not find any use and therefore were to be disposed of, with evident problems of costs and risk of environment pollution, it has surprisingly been discovered that the composition and the structure of this by-product allow for a very advantageous use thereof as a main component for producing a composite material having good technological properties, through mixing, heating and extrusion with a thermoplastic polymer.

The laminate scraps are produced with shapes and sizes which are quite variable, e.g. in form of cutouts or cutting with an area of several square centimeters and larger, or as powders and chips produced by the abrasion of the laminate rear face.

Therefore the first operation to be accomplished is a grinding of the material to render the particles size homogeneous enough for the subsequent treatment.

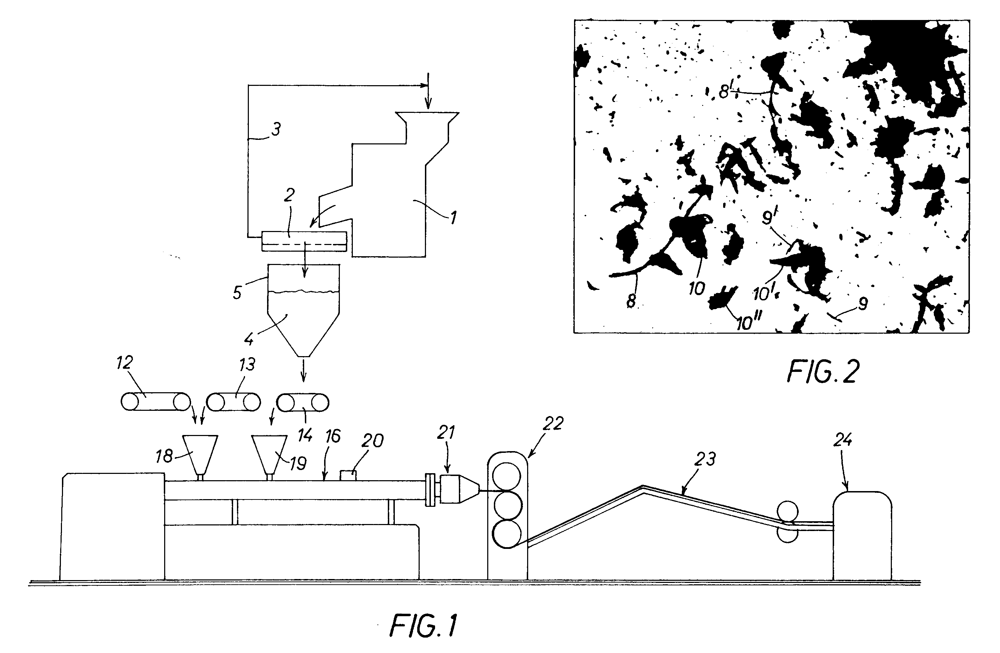

With reference to Fig. 1, the scraps, residuals or by-products from the manufacture of plastic ornamental laminates are carried to a mill 1, such as a hammer mill, and are ground up to a particle size smaller than 4 mm, preferably to an average particle size of 0,3 mm. To this purpose, the ground material at the outlet of mill 1 is carried to a screen 2, with the larger particles being returned to the mill 1 through recirculation at 3.

In the grinding a certain amount of heat is generated which at least partially dries the material from the moisture, if any.

The so ground and conditioned material 4 is stored into a hopper 5 and carried to the mixing step through a gravity proportioning device 14.

The photomicrograph of Fig. 2 shows, 50 times enlarged, the aspect of the so treated material which is that of a powder with a high fiber content. Such powder comprises at least 50% by weight of cellulose coming from the Kraft and ornamental paper, mainly in form of fibers such as 8, 8′, fibrils such as 9, 9′ or particles having an unregular shape, and at least 20% by weight of particles, pearls and sphere-like bodies such as 10, 10′, 10˝ of the paper impregnating resin. During the grinding step the resin which is quite brittle is crushed, partially exposing the cellulose fibers and fibrils having instead a high specific strength: as a result cellulose-resin aggregates having a large specific surface are obtained. The paper impregnating resin is a thermosetting resin, mainly a phenolic and melaminic resins, the former being used for impregnating the Kraft paper, the latter for impregnating the outer ornamentel sheet.

In the scrap material employed as a starting material of the process of the invention, such resins are not in the final condensation stage between phenol or derivative thereof, and formaldehyde, or melamine or derivative thereof and formaldehyde, since they have not been completely subjected to the temperature and pressure conditions which causes the further polycondensation of the impregnation resins which during the laminate pressing impart the final hardness and stability properties to the laminate. This is so since the scrap material mainly comes from trimming the edges of paper stacks being pressed, which were subjected neither to the high pressures of the press, nor to the temperatures existing therein.

This "intermediate" degree of polycondensation of the thermosetting resins is a characteristic which is exploited in the process of the invention since it confers to the scrap material a certain residual reactivity which advantageously shows up during the heating and the mixing with the thermoplastic polymer, also in respect of this latter, as will be explained later.

The other essential component of the composite material which is intended to be produced is a thermoplastic polymer or a mixture of thermoplastic polymers. Preferred thermoplastic polymers are polyethylene, polypropylene, polyvinyl chloride, acrylonitrile-butadiene-styrene (ABS) and acetal resins.

Moreover some known additives can be used, e.g. some antioxidants to stabilize the product in the time, such as 3-(3,5-ditertiobutyl-4-hydroxyphenyl)-n-octodecyl propionate, some lubricants to make easier the formation of sheets of semifinished products, such as calcium stearate, and diluent such as talc.

In order to modify and to improve the characteristics of the final product, other components can be added to the thermoplastic resin - powder of laminate scraps mixture, such as foaming agents, fiber or amorphous mineral fillers, inert organic fillers, pigments, microspheres, shock-resistant agents in an amount compatible with the stability of the base mixture made up by laminate scraps and thermoplastic resin.

The components are to be mixed after heating and fusion of the thermoplastic matrix. This is preferably achieved in an extruder 16 wherein the thermoplastic resin and the additives are introduced through a feeding hopper 18, after proper dosing by the gravity proportioning devices 12 and 13, the former for the thermoplastic resin, and the latter for the additives. As already pointed out, the powder of laminate scraps is carried to the mixing through a hopper 19 after suitable proportioning by the gravity proportioning device 14.

The relative amounts of the thermoplastic polymer, laminate scraps and additives can change according to the mechanical, physical, aesthetic and cost characteristics of the desired final material, as well as to the specific gravity of the employed thermoplastic resin, and to the type of the used additives, if any.

However the thermoplastic polymer amounts to at least 20% by weight of the overall mixture. A preferred percentage of the thermoplastic polymer is about 40% by weight of the overall mixture.

The components are mixed in the extruder at a temperature between 130 and 260°C, preferably between 150 and 220°C, depending upon the type of the thermoplastic polymer employed.

The mixing time, and therefore when using the extruder the length of the mixing zone, has to be long enough for the completion, in the thermosetting component of the mixture, of the reactions that can be considered in general as follows for the phenolic resin: 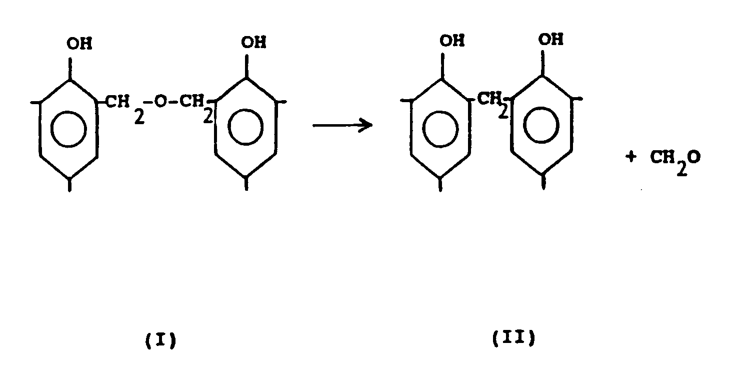
where (I) is the phenol-formaldehyde resin which is polymerized in an intermediate stage and called resitol, whereas (II) is the final product, unmeltable and insoluble, called resite, wherein the ether bonds of the resitol are changed into methylene bonds, generating formaldehyde.

A quite similar process takes place for the melaminic resin.

During this latter polymerization, the thermosetting resin shows a great affinity in respect of the thermoplastic component, thus forming a plastic reticulated structure within the cellulose matrix, characterized by remarkable technological properties. As a function of the different polymers which may be present, corresponding interactions of the chemical type may take place. For example, it has been noted that the polyolefins which are not reactive under normal conditions exhibit a great affinity in respect of the laminate scraps. This affinity is shown, for the polypropylene, by a greater emission of formic aldehyde in respect to what happens in air under the same conditions. Thi is deemed to be due to the exothermicity of the polycondensation reaction, with a consequent local increase of the temperature and decrease of the local viscosity of the thermoplastic polymer, as well as to an increased wettability enhanced by the pressure.

Still referring to Fig. 1, the extruder 16 is equipped with a degassing opening 20 for releasing the formaldehyde generated therein.

The mixture in a plastic condition is extruded through a die 21 adapted to form a semifinished product having suitable shape and size, e.g. plane sheets that are then transferred to a compacting calender 22 and successively to cooling and cutting stations 23 and 24.

The following data relate to some specific embodiment supplied as non limiting examples.

### Example 1.

Scraps of plastic laminate have been used having the following average composition by weight:

| | |
|---|---|
| - Cellulose (from Kraft paper) | 63% |
| - Phenolic resin (resitols) | 18% |
| - Phenolic resin (resites) | 7% |
| - Melaminic resin | 6% |
| - Minerals inerts | 6% |

These scraps have been ground in a hammer mill and screened to obtain the following particle sizes:

| screen mesh opening (mm) | % by weight |
|---|---|
| < 0.8 | 5 |
| < 0.5 | 18 |
| < 0.3 | 10 |
| < 0.2 | 34 |
| < 0.1 | 33 |

Polypropylene homopolymer with a fluidity index of 3 has been used for the thermoplastic polymer.

Moreover there has been prepared a mixture of additives containing:

| | |
|---|---|
| 3-(3,5-ditertiobutyl-4-hydroxyphenyl)-n-octodecyl propionate | 5% |
| Calcium stearate | 20% |
| Talc | 75% |

The laminate scraps, the propylene and the mixture of additives prepared as above have been continuously fed through gravity proportioning devices as shown in Fig. 1, so as to obtain the following flow rates:

| | |
|---|---|
| - Powders and laminate scraps | 60 kg/h |
| - Polypropylene | 40 kg/h |
| - Additives | 4 kg/h |

The overall flow rate of the extruder is 104 kg/h, thus forming a mixture having the following composition:

| | |
|---|---|
| - Powders and laminate scraps | 57.69% |
| - Polypropylene | 38.46% |
| - 3-(3,5-ditertiobutyl-4-hydroxyphenyl)-n-octodecyl propionate | 0.19% |
| - Calcium stearate | 0.78% |
| - Talc | 2.88% |

The extrusion temperature is 220°C. The extrusion plant is equipped with a die for sheets and is provided with the proper adjustments to prevent tensioning the sheet being produced.

The sheet outcoming from the die is calendered, cooled and cut, thus obtaining a thermoformable material ready for further applications.

A sample of this material, obtained through extrusion and calendering only, and therefore not through injection, has been subjected to the following technological tests:

| | |
|---|---|
| - Vicat softening temperature | > 157°C |
| - Resistance to tensile stress >17.3 MPa | (> 177 kg/cm²) |
| - Resistance to bending stress >27.8 MPa | (> 284 kg/cm²) |
| - Binding modulus of elasticity >2922 MPa | (> 29800 kg/cm²) |
| - Water absorption | < 1.5 % |

### Example 2.

The materials and the method of Example 1 have been used, except for an addition to the laminate scrap material of 20% by weight of granulated cutouts of the composite material prepared in accordance with Example 1.

### Example 3.

The materials of the example 1 have been used in the amounts indicated in such example except for using, as a thermoplastic polymer, polypropylene homopolymer with a fluidity index of 12.

The sheet so obtained has been crumbled in a blade granulator provided instead of the cutting station 24 of Fig. 1, so as to obtain small cubes of about 3 mm of composite materials adapted to feed an injection molding press.

## Claims

1. A process for manufacturing a thermoplastic composite material, characterized in that it comprises:
- a preliminary step of grinding a material made up by scraps and/or residuals from the production of ornamental plastic laminates, comprising at least 50% by weight of cellulose and at least 20% by weight of thermosetting resins ,including phenol formaldehyde resins and melamine formaldehyde resins, impregnating said cellulose, said thermosetting resins being further polycondensable, until the material is reduced to a fine powder made up of particles having sizes or diameter smaller than 4 mm;
- preparing a mixture containing a thermoplastic resin and the above ground scrap material, said thermoplastic resin being comprised between 20% and 60% by weight of the mixture;
- heating said mixture to a temperature comprised between 130 and 260°C in an extruder;
- forming semifinished articles through extrusion and cooling of said mixture.

2. A process as claimed in claim 1, characterized in that said thermoplastic resin is selected from polyethylene, polypropylene, polyvinyl chloride, acrylonitrile-butadiene-styrene (ABS) and acetal resins.

3. A process as claimed in claim 1, characterized in that said step of heating said mixture is carried out for a time long enough to complete the polycondensation of said resins further polycondensable present in said scrap material.

4. Thermoplastic composite material, characterized in that it comprises additives and a mixture containing thermoplastic resin and ground residuals from the production of ornamental plastic laminates; the mixture containing 20 to 60% by weight of the thermoplastic resin; and the ground residuals comprising at least 50% by weight of cellulose and at least 20% by weight of thermosetting resins, including phenol formaldehyde and melamine formaldehyde resins.

5. A thermoplastic composite material as claimed in claim 4, characterized in that said thermoplastic resin is selected from polyethylene, polypropylene, polyvinyl chloride, acrylonitrile-butadiene-styrene (ABS) and acetal resins.

6. A thermoplastic composite material as claimed in claim 4, characterized in that said additives are selected from 3-(3,5-ditertiobutyl-4-hydroxyphenyl-n-octodecyl propionate, calcium stearate, talc and combination thereof.

## Patentansprüche

1. Verfahren zum Herstellen eines thermoplastischen Verbundmaterials, dadurch gekennzeichnet, daß es umfaßt:
- einen vorbereitenden Schritt, in dem ein Material, das aus Abfällen und/oder Resten aus der Produktion von Kunststoff-Dekorlaminaten gebildet wird, welche mindestens 50 Gewichtsprozent Zellulose und mindestens 20 Gewichtsprozent warmaushärtende Harze, einschließlich Phenolformaldehydharze und Melaminformaldehydharze enthalten, mit denen die Zellulose imprägniert wird, wobei diese warmaushärtenden Harze weiter polykondensierbar sind, so lange gemahlen wird, bis das Material in ein feines Pulver zerkleinert ist, dessen Teilchen eine Größe oder einen Durchmesser von kleiner als 4 mm aufweisen;
- die Herstellung einer Mischung aus einem thermoplastischen Harz und dem obigen gemahlenen Abfallmaterial, wobei die Mischung zwischen 20 und 60 Gewichtsprozent thermoplastische Harze enthät;
- das Erhitzen dieser Mischung in einem Extruder auf eine Temperatur zwischen 130 und 260°C;
- das Formen von Halbfertigprodukten durch Extrudieren und Abkühlen der Mischung.

2. Verfahren nach Anspruch 1, dadurch gekennzeichnet, daß das thermoplastische Harz aus Polyethylen, Polypropylen, Polyvinylchlorid, Acrylnitril-Butadien-Styrol (ABS) und Acetalharzen ausgewählt ist.

3. Verfahren nach Anspruch 1, dadurch gekennzeichnet, daß der Schritt des Erhitzens der Mischung ausreichend lange durchgeführt wird, so daß die weitere Polykondensation der in dem Abfallmaterial vorliegenden Harze vollendet wird.

4. Thermoplastisches Verbundmaterial, dadurch gekennzeichnet, daß es Zusatzstoffe und eine Mischung umfaßt, die thermoplastisches Harz und gemahlene Abfälle aus der Produktion von Kunststoff-Dekorlaminaten enthält; die Mischung 20 bis 60 Gewichtsprozent thermoplastisches Harz enthält; und die gemahlenen Abfälle mindestens 50 Gewichtsprozent Zellulose und mindestens 20 Gewichtsprozent warmaushärtende Harze enthält, einschließlich Phenolformaldehydharze und Melaminformaldehydharze.

5. Thermoplastisches Verbundmaterial nach Anspruch 4, dadurch gekennzeichnet, daß das thermoplastische Harz aus Polyethylen, Polypropylen, Polyvinylchlorid, Acrylnitril-Butadien-Styrol (ABS) und Acetalharzen ausgewählt ist.

6. Thermoplastisches Verbundmaterial nach Anspruch 4, dadurch gekennzeichnet, daß die Zusatzstoffe aus 3-(3,5-Ditertiobutyl-4-Hydroxyphenyl-n-Octodecyl Propionat, Kalziumstearat, Talk und Kombinationen davon ausgewählt sind.

## Revendications

1. Un procédé de fabrication d'un matériau composite thermoplastique, caractérisé en ce qu'il consiste en:
- une étape préliminaire de broyage d'un matériau constitué de déchets et/ou de résidus de production de stratifiés en matière plastique destinés à la décoration, comprenant au moins 50% en poids de cellulose et au moins 20% en poids de résines thermodurcissables, incluant des résines phénolformaldéhydes et des résines mélamineformaldéhyde, imprégnant ladite cellulose, ces résines thermodurcissables étant en outre polycondensables, ce broyage se poursuivant jusqu'à réduction dudit matériau en poudre fine formé de particules dont la dimension en diamètre est inférieur à 4 mm;
- la préparation d'un mélange contenant une résine thermoplastique et les déchets broyés ci-dessus mentionnés, ladite résine thermoplastique représentant au moins 20% en poids du mélange;
- le chauffage dudit mélange à une température de réaction comprise entre 130 et 260°C dans une extrudeuse, et
- la formation d'articles semi-finis par extrusion et refroidissement dudit mélange.

2. Un procédé selon la revendication 1, caractérisé en ce que ladite résine thermoplastique est choisie parmi les résines de polyéthylène, polypropylène, chlorure de polyvinyle, acrylonitrile-butadiène-styrène (ABS) et résines acétal.

3. Un procédé selon la revendication 1, caractérisé en ce que ladite étape de chauffage dudit mélange est mise en oeuvre pendant une durée suffisamment longue pour permettre l'achèvement de la polycondensation desdits les résines thermodurcissables présentes dans lesdits déchets.

4. Un matériau composite thermoplastique caractérisé en ce qu'il comprend des additifs et un mélange contenant la résine thermoplastique les déchets broyés provenant de la production de stratifiés de matières plastiques destinés à la décoration, le mélange contenant de 20 à 60% en poids de résine thermoplastique et les déchets résiduels comprenant au moins 50% en poids de cellulose et au moins 20% en poids de résines thermodurcissables, incluant des résines phénolformaldéhyde et des résines mélamine formaldéhyde.

5. Un matériau composite thermoplastique ainsi que revendiqué dans la revendication 1, caractérisé en ce que ladite résine thermoplastique est choisie parmi les résines de polyéthylène, polypropylène, chlorure de polyvinyle, acrylonitrile-butadiène-styrène (ABS) et résines acétal.

6. Un matériau composite thermoplastique ainsi que revendiqué dans la revendication 4, caractérisé en ce que lesdits additifs sont choisis parmi 3-(3-5-ditertiobutyl-4-hydroxyphényl-n-octodécyl propionate, stéarate de calcium, talc et leurs combinaisons.
